# EUROPÄISCHE PATENTANMELDUNG

(11) **EP 2 777 797 A2**
(43) Veröffentlichungstag der Anmeldung: **17.09.2014**
(21) Anmeldenummer: 14154058.3
(22) Anmeldetag: 06.02.2014
(51) Int. Cl.: B01D 46/00

(54) **Verfahren und Vorrichtung zur Herstellung eines Filterelements und Filterelement**

(30) Priorität: 13.03.2013 DE 102013004283
(71) Anmelder: MANN + HUMMEL GMBH, 71638 Ludwigsburg (DE)
(72) Erfinder: Dudr, Karel, 67401 Trebic (CZ); Brychta, Marek, 67401 Trebic (CZ); Netolicka, Zdenek, 67521 Pribyslavice (CZ)

(57) **Zusammenfassung**

Es werden ein Verfahren und eine Vorrichtung (10) zur Herstellung eines Filterelements zur Filtration von Fluid, insbesondere Luft, Wasser, Öl, Kraftstoff oder Harnstofflösung, insbesondere einer Brennkraftmaschine, insbesondere eines Kraftfahrzeugs, sowie ein Filterelement beschrieben. Eine Filtermediumbahn (12) wird entlang wenigstens einer Bearbeitungslinie (18) behandelt und entlang wenigstens einer Schnittlinie (14) geschnitten. Die Filtermediumbahn (12) wird neben der wenigstens einen Bearbeitungslinie (18) entlang der wenigstens einen Schnittlinie (14) geschnitten.

## Beschreibung

### Technisches Gebiet

Die Erfindung betrifft ein Verfahren zur Herstellung eines Filterelements zur Filtration von Fluid, insbesondere Luft, Wasser, Öl, Kraftstoff oder Harnstofflösung, insbesondere einer Brennkraftmaschine, insbesondere eines Kraftfahrzeugs, bei dem eine Filter-mediumbahn entlang wenigstens einer Bearbeitungslinie behandelt und entlang wenigstens einer Schnittlinie geschnitten wird.

Ferner betrifft die Erfindung eine Vorrichtung zur Herstellung eines Filterelements zur Filtration von Fluid, insbesondere Luft, Wasser, Öl, Kraftstoff oder Harnstofflösung, insbesondere einer Brennkraftmaschine, insbesondere eines Kraftfahrzeugs, insbesondere zur Durchführung des erfindungsgemäßen Verfahrens, mit wenigstens einer Bearbeitungseinrichtung, welche wenigstens ein Bearbeitungselement zum behandeln einer Filtermediumbahn des Filterelements entlang wenigstens einer Bearbeitungslinie aufweist, und mit wenigstens einer Schneideinrichtung, welche wenigstens ein Schneidelement zum Schneiden der Filtermediumbahn entlang wenigstens einer Schnittlinie aufweist.

Außerdem betrifft die Erfindung ein Filterelement zur Filtration von Fluid, insbesondere Luft, Wasser, Öl, Kraftstoff oder Harnstofflösung, insbesondere einer Brennkraftmaschine, insbesondere eines Kraftfahrzeugs, insbesondere nach dem erfindungsgemäßen Verfahren und/oder mit der erfindungsgemäßen Vorrichtung hergestelltes Filterelement, mit einer Filtermediumbahn, welche entlang wenigstens einer Bearbeitungslinie behandelt und entlang wenigstens einer Schnittlinie geschnitten ist.

### Stand der Technik

Aus der DE 10 2009 054 077 A1 ist ein Verfahren zur Herstellung eines Filterelements zur Filtration von Fluiden bekannt. Dabei wird eine mehrlagige Mattenbahn an ihren Längsrändern beschnitten. Die Mattenbahn wird in Bahnabschnitte aufgetrennt und die Bahnabschnitte an ihren zu den Längsrändern quer verlaufenden Enden miteinander verbunden. Die Bahnabschnitte werden in die Form einer rohrförmigen Filtermatte gebracht. Vor dem Beschneiden der Längsränder entlang derselben wird eine die Lagen der Mattenbahn miteinander versiegelnde Schweißbahn gebildet. Das Beschneiden wird durch einen Schnitt durchgeführt, der innerhalb jeder Schweißbahn im Abstand von deren beiden Seitenrändern verläuft.

Der Erfindung liegt die Aufgabe zugrunde, ein Verfahren und eine Vorrichtung zur Herstellung eines Filterelements und ein Filterelement der eingangs benannten Art zu gestalten, bei dem/der die wenigstens eine Bearbeitungslinie und/oder die wenigstens eine Schnittlinie, insbesondere deren Genauigkeit, verbessert werden kann.

### Offenbarung der Erfindung

Diese Aufgabe wird erfindungsgemäß dadurch gelöst, dass die Filtermediumbahn neben der wenigstens einen Bearbeitungslinie entlang der wenigstens einen Schnittlinie geschnitten wird.

Erfindungsgemäß erfolgt das Schneiden der Filtermediumbahn außerhalb der Bearbeitungslinie. Auf diese Weise wird die Bearbeitungslinie nicht durch die wenigstens eine Schnittlinie gestört oder zerstört. Ferner muss nicht berücksichtigt werden, dass die wenigstens eine Bearbeitungslinie breit genug für die Aufnahme der wenigstens einen Schnittlinie ist. Die Breite der wenigstens einen Bearbeitungslinie kann so verringert werden. Vorteilhafterweise kann die wenigstens eine Schnittlinie und/oder die wenigstens eine Bearbeitungslinie durchgängig sein. Auf diese Weise kann die Filtermediumbahn entlang der wenigstens einen Schnittlinie in Bahnabschnitte getrennt werden. Die wenigstens eine Schnittlinie und/oder die wenigstens eine Bearbeitungslinie kann auch unterbrochen sein. Auf diese Weise ist eine Perforation der Filtermediumbahn möglich.

Bei einer vorteilhaften Ausgestaltung des Verfahrens kann die Filtermediumbahn aus mehreren Lagen gebildet werden und die Lagen der Filtermediumbahn können entlang der wenigstens einen Bearbeitungslinie miteinander verbunden werden. Vorteilhafterweise kann die wenigstens eine Bearbeitungslinie eine Verbindungslinie sein, entlang der die Filtermediumbahn zur Verbindung der Lagen entsprechend behandelt wird. Auf diese Weise können die Lagen neben einem Rand der Filtermediumbahn, welcher durch die wenigstens eine Schnittlinie gebildet werden kann, miteinander verbunden werden. So kann verhindert werden, dass sich die Lagen an den Rändern der Filtermediumbahn auffächern oder die Ränder der Filtermediumbahn ausfransen.

Bei einer weiteren vorteilhaften Ausgestaltung des Verfahrens kann die Filtermediumbahn entlang der wenigstens einen Bearbeitungslinie geschweißt werden. Mittels einem Schweißverfahren kann bei einer mehrlagigen Filtermediumbahn eine zuverlässige Verbindung der Lagen erfolgen. Eine einlagige Filtermediumbahn kann mittels eines Schweißverfahrens entlang der wenigstens einen Bearbeitungslinie stabilisiert und/oder verfestigt werden. Auf diese Weise kann verhindert werden, dass ein insbesondere gewebtes oder nicht gewebtes Filtermedium an einem Schnittrand entlang der wenigstens einen Schnittlinie ausfransen kann. Vorteilhafterweise kann die Filtermediumbahn nach einem Ultraschallschweißverfahren verschweißt werden.

Vorteilhafterweise kann die Filtermediumbahn entlang der wenigstens einen Bearbeitungslinie auch in anderer Weise mechanisch und/oder chemisch und/oder thermisch und/oder stofflich behandelt werden. Sie kann insbesondere geklebt, geprägt, gestanzt oder gepresst werden. Mittels der Behandlung kann die Filtermediumbahn im Bereich der wenigstens einen Bearbeitungslinie auch mit einer bestimmten Form und/oder einer mechanischen Eigenschaft versehen werden.

Bei einer weiteren vorteilhaften Ausgestaltung des Verfahrens kann die Filtermediumbahn zwischen zwei Bearbeitungslinien entlang der wenigstens einen Schnittlinie geschnitten werden. Auf diese Weise kann eine zusammenhängende Filtermediumbahn in mehrere Bahnabschnitte unterteilt werden. Die Bahnabschnitte können entlang der Schnittlinie voneinander getrennt werden. Die Bahnabschnitte können in ungeschnittenen Bereichen zusammenhängend sein. Neben der wenigstens einen Schnittlinie, welche einen jeweiligen Rand der Bahnabschnitte bildet, sind die Bahnabschnitte jeweils in einer der Bearbeitungslinien behandelt. In einem Arbeitsgang können die Ränder beider benachbarten Bahnabschnitte in jeweils einer Bearbeitungslinie behandelt werden.

Bei einer weiteren vorteilhaften Ausgestaltung des Verfahrens kann die Filtermediumbahn zunächst entlang der wenigstens einen Bearbeitungslinie behandelt und anschließend entlang der wenigstens einen Schnittlinie geschnitten werden. Dies hat den Vorteil, dass die Filtermediumbahn entlang der wenigstens einen Bearbeitungslinie durch die entsprechende Behandlung fixiert werden kann. Beim anschließenden Schneiden entlang der wenigstens einen Schnittlinie kann die Struktur der Filtermediumbahn im Bereich der wenigstens einen Bearbeitungslinie nicht mehr beeinflusst werden. Bei einer mehrlagigen Filtermediumbahn können so zunächst die Lagen miteinander verbunden und aneinander fixiert werden. Beim Schneiden können sich die Lagen dann nicht mehr verschieben.

Die technische Aufgabe wird ferner durch die erfindungsgemäße Vorrichtung zur Herstellung eines Filterelementes dadurch gelöst, dass das wenigstens eine Bearbeitungselement und das wenigstens eine Schneidelement in einer Bewegungsrichtung der Filtermediumbahn relativ zur Vorrichtung betrachtet versetzt zueinander angeordnet sind.

Die oben im Zusammenhang mit dem erfindungsgemäßen Verfahren und dessen vorteilhaften Ausgestaltungen aufgezeigten Vorteile und Merkmale gelten für die erfindungsgemäße Vorrichtung und deren vorteilhaften Ausführungsformen entsprechend und umgekehrt. Durch die versetzte Anordnung des wenigstens einen Schneidelements gegenüber dem wenigstens einen Bearbeitungselement kann die Filtermediumbahn einfach außerhalb der Bearbeitungslinie geschnitten werden.

Vorteilhafterweise kann die Bearbeitungseinrichtung wenigstens eine Schweißeinrichtung, insbesondere ein Ultraschallschweißeinrichtung, aufweisen. Es kann auch eine nach einem anderen Behandlungsverfahren, insbesondere einem Klebeverfahren, Stanzverfahren, Prägeverfahren oder Pressverfahren, arbeitende Bearbeitungseinrichtung vorgesehen sein.

Vorteilhafterweise kann die Schneideinrichtung wenigstens ein Messer aufweisen. Es kann auch eine nach einem anderen Schneidverfahren, insbesondere nach einem Laserschnittverfahren, arbeitende Schneideinrichtung vorgesehen sein.

Bei einer vorteilhaften Ausführungsform kann das wenigstens eine Bearbeitungselement in einer Funktionsreihenfolge vor dem wenigstens einen Schneidelement angeordnet sein. Auf diese Weise kann die Filtermediumbahn, insbesondere eine Endlosbahn, in einem Durchlaufverfahren zunächst entlang der Bearbeitungslinien behandelt und anschließend geschnitten werden.

Bei einer weiteren vorteilhaften Ausführungsform kann das wenigstens eine Bearbeitungselement und/oder das wenigstens eine Schneidelement wenigstens ein rotierendes Element, insbesondere eine Rolle, aufweisen. Mit einem rotierenden Element kann einfach die Filtermediumbahn insbesondere nach einem Endlosverfahren behandelt und geschnitten werden. Vorteilhafterweise kann das wenigstens eine Bearbeitungselement eine Sonotrode, insbesondere eine Rechteck-Stufensonotrode, und einen Rotationsamboss als Gegenlager aufweisen, mittels der die Filtermediumbahn nach einem Ultraschallschweißverfahren verschweißt werden kann. Alternativ kann auch eine Rotationssonotrode mit einem entsprechenden Amboss vorgesehen sein. Vorteilhafterweise kann das wenigstens eine Schneidelement ein Rollenmesser aufweisen, mit dem die Filtermediumbahn entlang der wenigstens einen Schnittlinie einfach geschnitten werden kann.

Bei einer weiteren vorteilhaften Ausführungsform kann die wenigstens eine Bearbeitungseinrichtung zwei jeweils eine der Bearbeitungslinien definierende Bearbeitungselemente aufweisen und die wenigstens eine Schneideinrichtung kann ein Schneidelement aufweisen, welches sich quer zum Bearbeitungsweg betrachtet zwischen den beiden Bearbeitungselementen befinden kann. Vorteilhafterweise kann die Bearbeitungseinrichtung zwei Gegenlager für wenigstens einen entsprechenden Schweißkopf, insbesondere wenigstens einer Sonotrode, aufweisen, die jeweils eine Schweißlinie definieren. Die beiden Gegenlager können vorteilhafterweise als umfangsmäßig verlaufende Ambossstege eines Rotationsambosses realisiert sein. Vorteilhafterweise kann die Schneideinrichtung ein Rollenmesser aufweisen, dessen Klinge sich in Richtung des Bearbeitungsweges zwischen den beiden Bearbeitungselementen befindet. Vorteilhafterweise kann sich die Schneideinrichtung in der Funktionsreihenfolge hinter den beiden Bearbeitungselementen befinden. Alternativ kann sie in der Funktionsreihenfolge auch neben den beiden Bearbeitungselementen angeordnet sein. Auf diese Weise kann das Filtermedium gleichzeitig behandelt und geschnitten werden.

Bei einer weiteren vorteilhaften Ausführungsform kann eine Mehrzahl von Kombinationen aus Bearbeitungseinrichtungen und Schneideinrichtungen bezüglich des Bearbeitungswegs nebeneinander angeordnet sein. Auf diese Weise können mehrere Schnittlinien und mehrere Bearbeitungslinien gleichzeitig nebeneinander realisiert werden.

Die technische Aufgabe wird außerdem durch das erfindungsgemäße Filterelement dadurch gelöst, dass sich die wenigstens eine Schnittlinie neben der wenigstens einen Bearbeitungslinie befindet.

Die im Zusammenhang mit dem erfindungsgemäßen Verfahren zur Herstellung eines Filterelements und dessen vorteilhaften Ausgestaltungen und der erfindungsgemäßen Vorrichtung und deren vorteilhaften Ausführungsformen aufgezeigten Vorteile und Merkmale gelten für das erfindungsgemäße Filterelement und dessen vorteilhaften Ausführungsformen entsprechend. Auf diese Weise wird die Behandlung entlang der wenigstens einen Bearbeitungslinie durch den Schnitt der Schnittlinie nicht gestört. Insbesondere an Rändern der Filtermediumbahn kann so ein präziser Verlauf der wenigstens einen Schnittlinie realisiert werden. Vorteilhafterweise kann die Filtermediumbahn im Filterelement entsprechend geformt, insbesondere gefaltet oder umfangsmäßig geschlossen, sein.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: eine isometrische Darstellung einer Schneidvorrichtung mit einer Ultraschallschweißeinrichtung zum Schweißen und einer Rollenschneideinrichtung zum Schneiden einer mehrlagigen Filtermediumbahn;
- Figur 2: eine Detailansicht der Schneidvorrichtung aus der Figur 1 im Bereich der Ultraschallschweißeinrichtung und der Rollenschneideinrichtung;
- Figur 3: einen Querschnitt der Detailansicht aus der Figur 2 entlang der dortigen Schnittfläche III im Bereich der Ultraschallschweißeinrichtung;
- Figur 4: eine Queransicht der Schneidvorrichtung aus der Figur 1 in Betrachtungsrichtung auf die Ultraschallschweißeinrichtung;
- Figur 5: eine Anordnung von fünf Schneidvorrichtungen entsprechend der Schneidvorrichtung aus den Figuren 1 bis 4, welche nebeneinander angeordnet sind.

In den Figuren sind gleiche Bauteile mit gleichen Bezugszeichen versehen.

### Ausführungsform(en) der Erfindung

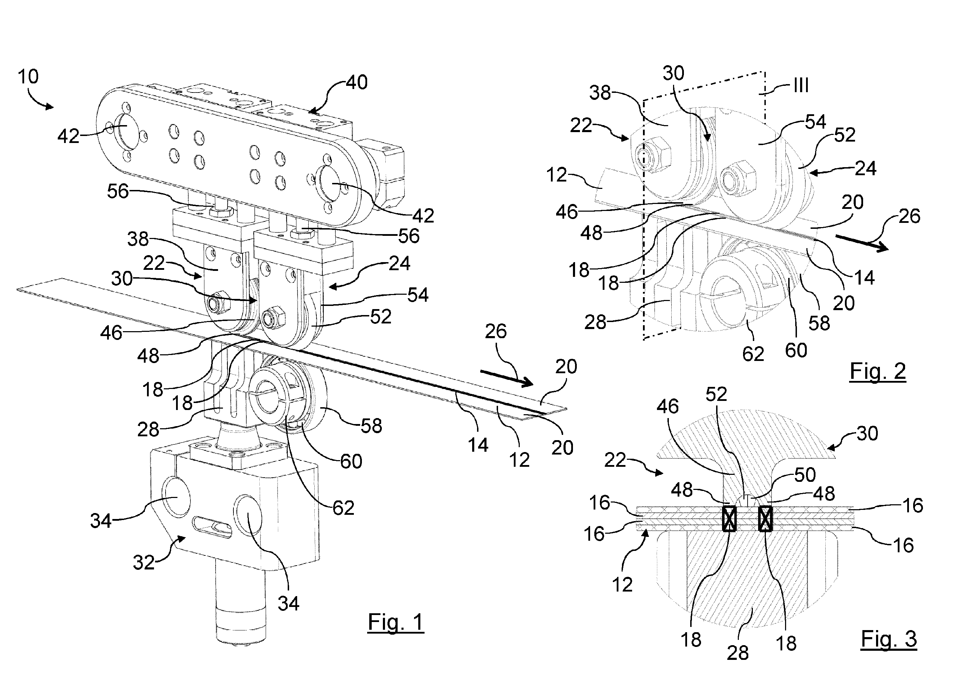

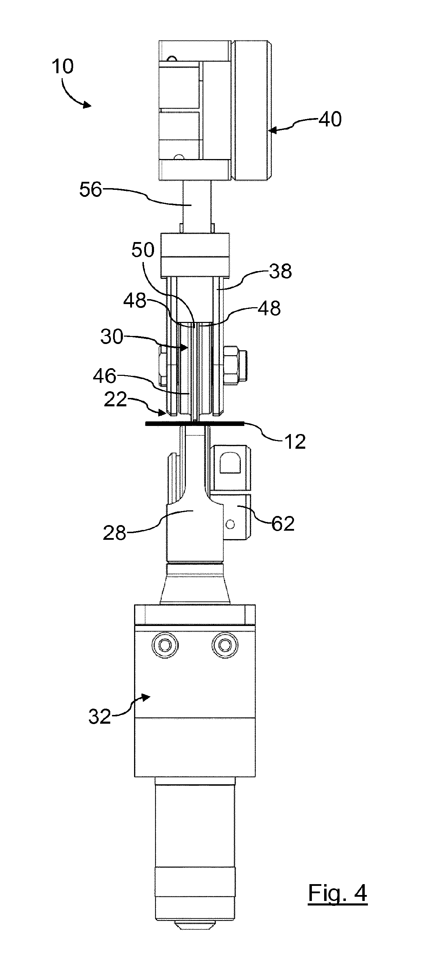

In den Figuren 1 bis 4 ist eine Schneidvorrichtung 10 in unterschiedlichen Perspektiven und Detailansichten gezeigt. Die Schneidvorrichtung 10 dient zum Verschweißen der insgesamt vier Lagen 16 einer mehrlagigen Filtermediumbahn 12 entlang von zwei Schweißnähten 18 und dem anschließenden Schneiden der Filtermediumbahn 12 entlang einer Schnittlinie 14, die sich zwischen den beiden Schweißnähten 18 befindet.

Mit der Schneidvorrichtung 10 wird die Filtermediumbahn 12 in Filtermediumabschnitte 20 getrennt, welche später in hier nicht weiter interessierender Weise zu einem Filterelement verarbeitet werden. Die Schweißnähte 18 bilden die Ränder der Filtermediumabschnitte 20. Die Filtermediumabschnitte 20 können bei dem Filterelement gefaltet und/oder umfangsmäßig geschlossen werden. Die Filtermediumabschnitte 20 können bei Filterelementen unterschiedlicher Ausgestaltungen, beispielsweise Rundfilterelementen oder Flachfilterelementen, verwendet werden. Die Filterelemente können zur Filtrierung von Fluiden, beispielsweise Luft, Wasser, Öl, Kraftstoff oder Harnstofflösung, eingesetzt werden. Sie können bei Brennkraftmaschinen von Kraftfahrzeugen oder andersartigen Brennkraftmaschinen, beispielsweise Industriemotoren, verwendet werden. Die Filterelemente können auch außerhalb der Kraftfahrzeugtechnik Einsatz finden.

Die Schneidvorrichtung 10 umfasst eine Ultraschallschweißeinrichtung 22 und eine Rollenschneideinrichtung 24. Die Filtermediumbahn 12 wird zum Schneiden und Schweißen in einer Förderrichtung 26 durch die Schneidvorrichtung 10 befördert. Die Ultraschallschweißvorrichtung 22 befindet sich in Förderrichtung 26 betrachtet funktional vor der Rollenschneideinrichtung 24. Die Filtermediumbahn 12 wird zuerst entlang der Schweißnähte 18 geschweißt und anschließend mit der Rollenschneideinrichtung 24 entlang der Schnittlinie 14 geschnitten.

Die Ultraschallschweißeinrichtung 22 umfasst eine Sonotrode 28, in den Figuren 1 bis 4 unterhalb der Filtermediumbahn 12, und einen Rotationsamboss 30 als Gegenlager für die Sonotrode 28, oberhalb der Filtermediumbahn 12. Die Sonotrode 28 ist exemplarisch als sogenannte Rechteck-Stufensonotrode mit zwei Slots ausgelegt. Eine dem Rotationsamboss 30 zugewandte Oberseite der Sonotrode 28 wirkt als Schweißfläche. Die Schweißfläche ist rechteckig und erstreckt sich mit ihrer langen Seite in Förderrichtung 26.

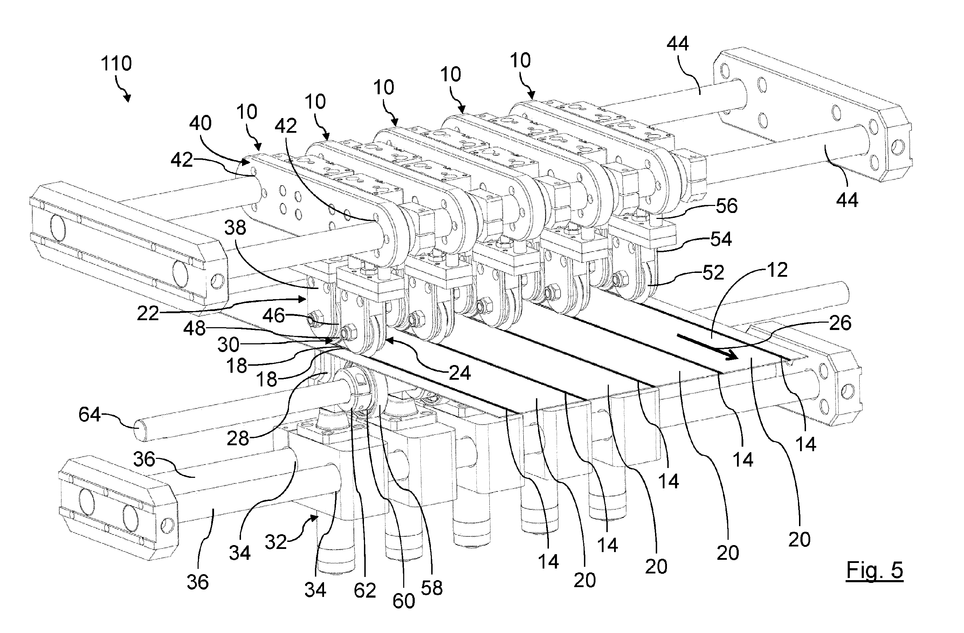

Die Sonotrode 28 ist auf der dem Rotationsamboss 30 abgewandten Seite an einer unteren Halteeinrichtung 32 befestigt. Die untere Halteeinrichtung 32 verfügt über zwei Achsenaufnahmen 34 in Form von kreiszylindrischen Durchgangslöchern, deren Mittelachsen sich senkrecht zur Förderrichtung 26 und, in der normalen Einbauposition der Schneidvorrichtung 10, horizontal erstrecken. Durch die Achsenaufnahmen 34 führt jeweils eine untere Halteachse 36, auf denen die untere Halteeinrichtung 32 axial verschiebbar angeordnet ist. In der Figur 5 sind die unteren Halteachsen 36 bei einer Schneidanlage 111 gezeigt, bei der fünf gleiche Schneidvorrichtungen 10 nebeneinander angeordnet sind. Durch Verschieben der unteren Halteeinrichtung 32 auf den unteren Halteachsen 36 kann die Position der Ultraschallschweißeinrichtung 22 verändert werden.

Der Rotationsamboss 30 hat die Form einer Zylinderwalze. Er ist in einer Walzenhalterung 38 um seine Mittelachse drehbar gelagert. Die Mittelachse des Rotationsamboss 30 erstreckt sich senkrecht zur Förderrichtung 26 und horizontal. Sie verläuft also parallel zu den Mittelachsen der Achsenaufnahmen 34 und der unteren Halteachsen 36. Die Walzenhalterung 38 ist auf ihrer der Sonotrode 28 abgewandten Seite an einer oberen Halteeinrichtung 40 befestigt. Die obere Halteeinrichtung 40 verfügt ähnlich wie die untere Halteeinrichtung 32 über zwei Achsenaufnahmen 42 in Form von kreiszylindrischen Durchgangslöchern, durch die jeweils eine obere Halteachse 44, welche in der Figur 5 gezeigt sind, hindurchführen. Die obere Halteeinrichtung 40 ist auf den oberen Halteachsen 44 verschiebbar angeordnet. Auf diese Weise kann die Position der oberen Halteeinrichtung 44 und damit des Rotationsambosses 30 verändert werden.

Der Rotationsamboss 30 verfügt an seiner radial äußeren Umfangsseite über einen, in der Figur 3 im Detail gezeigten, umfangsmäßig verlaufenden Ringvorsprung 46. Der Ringvorsprung 46 befindet sich axial zur Mittelachse betrachtet etwa in der Mitte des Rotationsamboss 30. Der Ringvorsprung 46 erstreckt sich radial nach außen. Im Bereich der axial äußeren Ränder des Ringvorsprungs 46 sind zwei Ambossstege 48 ausgebildet. Die Ambossstege 48 erstrecken sich in radialer Richtung und sind umfangsmäßig jeweils zusammenhängend. Die beiden Ambossstege 48 werden durch eine umfangsmäßig verlaufende Vertiefung 50 voneinander getrennt. Bei korrekt justierter Schneidvorrichtung 10 befinden sich die Ambossstege 48 axial zur Mittelachse des Rotationsamboss 30 betrachtet innerhalb der Schweißfläche der Sonotrode 28. Dies ist insbesondere in der Figur 3 gezeigt. Die beiden Ambossstege 48 bilden so jeweils ein Gegenlager für die Sonotrode 28, sodass die Lagen 16 der Filtermediumbahn 12 entlang der beiden Schweißnähte 18 verschweißt werden können. Die Lage und Form der Schweißnähte 18 wird also durch die Ambossstege 48 definiert. Beim Befördern der Filtermediumbahn 12 in Förderrichtung 26 rollt der Rotationsamboss 30 auf der Filtermediumbahn 12 ab, sodass die beiden parallelen, jeweils zusammenhängenden Schweißnähte 18 entstehen. Die Ambossstege 48 wirken dabei als Bearbeitungselemente zum Behandeln, nämlich Verschweißen, der Filtermediumbahn 12 entlang der Bearbeitungslinien, nämlich der Schweißnähte 18.

Die Rollenschneideinrichtung 24 verfügt über ein Rollenmesser 52, welches in einer oberen Messerhalterung 54 um eine Mittelachse des Rollenmessers 52 drehbar gelagert ist. Die Mittelachse des Rollenmessers 52 verläuft parallel zur Mittelachse des Rotationsamboss 30, also senkrecht zur Förderrichtung 26 und horizontal. Die obere Messerhalterung 54 ist an der oberen Halteeinrichtung 40 befestigt und mit dieser auf den oberen Halteachsen 44 verschiebbar.

Die Walzenhalterung 38 und die obere Messerhalterung 54 sind jeweils über einstellbare Justiermittel 56 mit der oberen Halteeinrichtung 44 verbunden. Mit den Justiermitteln 56 können die obere Messerhalterung 44 und die Walzenhalterung 38 jeweils in ihrer vertikalen Höhe, das heißt in ihrem Abstand zu der Sonotrode 28 und zu einer Gegenschneidrolle 58, eingestellt werden.

Eine umfangsmäßig verlaufende Klinge des Rollenmessers 52 befindet sich bei Betrachtung in Förderrichtung 26 zwischen den beiden Ambossstegen 48. Die Filtermediumbahn 12 wird zwischen den beiden Schweißnähten 18 entlang der Schnittlinie 14 geschnitten. Die Schnittlinie 14 befindet sich außerhalb der Schweißnähte 18.

Auf der dem Rollenmesser 52 gegenüberliegenden Seite der Filtermediumbahn 12 verfügt die Rollenschneideinrichtung 24 über eine Gegenschneidrolle 58, welche ein Gegenlager für das Rollenmesser 52 bildet. Die Gegenschneidrolle 58 ist mittels eines Kugellagers 60 auf einem Haltering 62 gelagert. Eine Mittelachse der Gegenschneidrolle 58 und des Kugellagers 60 verläuft parallel zur Mittelachse des Rollenmessers 52, also horizontal und senkrecht zur Förderrichtung 26. Der Haltering 62 ist auf einer in der Figur 5 gezeigten mittleren Halteachse 64 verschiebbar angeordnet. So kann die Position der Gegenschneidrolle 58 entsprechend geändert werden. Die mittlere Halteachse 64 verläuft parallel zu den unteren Halteachsen 36 und den oberen Halteachsen 44.

Die Mittelachse der Gegenschneidrolle 58 befindet sich bei dem gezeigten Ausführungsbeispiel lotrecht unterhalb der Mittelachse des Rollenmessers 52. Sie kann auch zu dieser versetzt angeordnet sein. Die Schweißfläche der Sonotrode 28 befindet sich etwa auf gleicher Höhe wie eine obere Umfangsseite der Gegenschneidrolle 58. Die Filtermediumbahn 12 wird in horizontaler Ausrichtung durch die Ultraschallschweißeinrichtung 22 und die Rollenschneideinrichtung 24 geführt.

Bei der in der Figur 5 gezeigten Schneidanlage 111 sind fünf gleiche Schneidvorrichtungen 10 nebeneinander angeordnet. Mit den Schneidvorrichtungen 10 kann so die Filtermediumbahn 12 in einem Arbeitsschritt entlang von zehn Schweißnähten 18 geschweißt und entlang von fünf Schnittlinien 14 geschnitten werden. So können vier Filtermediumabschnitte 20 in einem Arbeitsgang geschnitten und an ihren Rändern geschweißt werden.

## Patentansprüche

1. Verfahren zur Herstellung eines Filterelements zur Filtration von Fluid, insbesondere Luft, Wasser, Öl, Kraftstoff oder Harnstofflösung, insbesondere einer Brennkraftmaschine, insbesondere eines Kraftfahrzeugs, bei dem eine Filtermediumbahn (12) entlang wenigstens einer Bearbeitungslinie (18) behandelt und entlang wenigstens einer Schnittlinie (14) geschnitten wird, **dadurch gekennzeichnet, dass** die Filtermediumbahn (12) neben der wenigstens einen Bearbeitungslinie (18) entlang der wenigstens einen Schnittlinie (14) geschnitten wird.

2. Verfahren nach Anspruch 1, **dadurch gekennzeichnet, dass** die Filtermediumbahn (12) aus mehreren Lagen (16) gebildet wird und die Lagen (16) der Filtermediumbahn (12) entlang der wenigstens einen Bearbeitungslinie (18) miteinander verbunden werden.

3. Verfahren nach Anspruch 1 oder 2, **dadurch gekennzeichnet, dass** die Filtermediumbahn (12) entlang der wenigstens einen Bearbeitungslinie (18) geschweißt wird.

4. Verfahren nach einem der vorigen Ansprüche, **dadurch gekennzeichnet, dass** die Filtermediumbahn (12) zwischen zwei Bearbeitungslinien (18) entlang der wenigstens einen Schnittlinie (14) geschnitten wird.

5. Verfahren nach einem der vorigen Ansprüche, **dadurch gekennzeichnet, dass** die Filtermediumbahn (12) zunächst entlang der wenigstens einen Bearbeitungslinie (18) behandelt und anschließend entlang der wenigstens einen Schnittlinie (14) geschnitten wird.

6. Vorrichtung (10) zur Herstellung eines Filterelements zur Filtration von Fluid, insbesondere Luft, Wasser, Öl, Kraftstoff oder Harnstofflösung, insbesondere einer Brennkraftmaschine, insbesondere eines Kraftfahrzeugs, insbesondere zur Durchführung des Verfahrens nach einem der vorigen Ansprüche, mit wenigstens einer Bearbeitungseinrichtung (22), welche wenigstens ein Bearbeitungselement (28, 30, 48) zum Behandeln einer Filtermediumbahn (12) des Filterelements entlang wenigstens einer Bearbeitungslinie (18) aufweist, und mit wenigstens einer Schneideinrichtung (24), welche wenigstens ein Schneidelement (52, 58) zum Schneiden der Filtermediumbahn (12) entlang wenigstens einer Schnittlinie (14) aufweist, **dadurch gekennzeichnet, dass** das wenigstens eine Bearbeitungselement (28, 30, 48) und das wenigstens eine Schneidelement (52, 58) in einer Bewegungsrichtung (26) der Filtermediumbahn (12) relativ zur Vorrichtung (10) betrachtet versetzt zueinander angeordnet sind.

7. Vorrichtung nach Anspruch 6, **dadurch gekennzeichnet, dass** das wenigstens eine Bearbeitungselement (28, 30, 48) in einer Funktionsreihenfolge vor dem wenigstens einen Schneidelement (52, 58) angeordnet ist.

8. Vorrichtung nach Anspruch 6 oder 7, **dadurch gekennzeichnet, dass** das wenigstens eine Bearbeitungselement (28, 30, 48) und/oder das wenigstens eine Schneidelement (52, 58) wenigstens ein rotierendes Element, insbesondere einer Rolle (30, 52, 58), aufweist.

9. Vorrichtung nach einem der Ansprüche 6 bis 8, **dadurch gekennzeichnet, dass** die wenigstens eine Bearbeitungseinrichtung (22) zwei jeweils eine der Bearbeitungslinien (18) definierende Bearbeitungselemente (48) aufweist und die wenigstens eine Schneideinrichtung (24) ein Schneidelement (52) aufweist, welches sich quer zum Bearbeitungsweg (26) betrachtet zwischen den beiden Bearbeitungselementen (48) der Bearbeitungseinrichtung (22) befindet.

10. Vorrichtung nach einem der Ansprüche 6 bis 9, **dadurch gekennzeichnet, dass** eine Mehrzahl von Kombinationen aus Bearbeitungseinrichtungen (52) und Schneideinrichtungen (24) bezüglich des Bearbeitungswegs (26) nebeneinander angeordnet ist.

11. Filterelement zur Filtration von Fluid, insbesondere Luft, Wasser, Öl, Kraftstoff oder Harnstofflösung, insbesondere einer Brennkraftmaschine, insbesondere eines Kraftfahrzeugs, insbesondere nach einem Verfahren nach einem der Ansprüche 1 bis 5 und/oder mit einer Vorrichtung nach einem der Ansprüche 6 bis 10 hergestelltes Filterelement, mit einer Filtermediumbahn (12), welche entlang wenigstens einer Bearbeitungslinie (18) behandelt und entlang wenigstens einer Schnittlinie (14) geschnitten ist, **dadurch gekennzeichnet, dass** sich die wenigstens eine Schnittlinie (14) neben der wenigstens einen Bearbeitungslinie (18) befindet.
